# EUROPÄISCHE PATENTSCHRIFT

(11) **EP 0 833 420 B1**
(45) Veröffentlichungstag und Bekanntmachung des Hinweises auf die Patenterteilung: **13.11.2002**
(21) Anmeldenummer: 97114715.2
(22) Anmeldetag: 26.08.1997
(51) Int. Cl.: H02G 3/08

(54) **Dichtungsanordnung für spritzwassergeschützte Elektro-Installationsgeräte**
Sealing arrangement for splashproof electrical apparatus
Dispositif d'étanchéité pour appareil électrique protégé contre les projections d'eau

(30) Priorität: 28.09.1996 DE 29616958 U
(43) Veröffentlichungstag der Anmeldung: 01.04.1998
(73) Patentinhaber: GIRA GIERSIEPEN GmbH. & CO. KG., D-42477 Radevormwald (DE)
(72) Erfinder: Kirschey,Frank, 42477 Radevormwald (DE); Trapp,Klaus, 58511 Lüdenscheid (DE)
(74) Vertreter: Patentanwälte Dr. Solf & Zapf

(56) Entgegenhaltungen:
- EP-A- 0 802 599
- DE-A- 3 107 791

## Beschreibung

Die vorliegende Erfindung betrifft eine Dichtungsanordnung für spritzwassergeschützte Elektro-Installationsgeräte in Unterputz-Ausführung, insbesondere für Steckdosen und/oder Schalter, wobei ein erstes Dichtungselement zur Abdichtung zwischen einem Tragring eines in eine Unterputzdose einsetzbaren Gerätesockels und einem Abdeckrahmen sowie ein zweites Dichtungselement zur Abdichtung zwischen dem Abdeckrahmen und einem Zentraleinsatzelement vorgesehen sind.

Bei einer bekannten Ausführung eines solchen spritzwassergeschützten, für Feuchträume geeigneten Installationsgerätes (insbesondere nach IP 44) wird einerseits der Wand-Abdeckrahmen über eine in einer nutartigen Aufnahme angeordnete Moosgummidichtung gegen den Tragring des Gerätesockels abgedichtet. Andererseits ist der Spalt zwischen dem Zentraleinsatz und dem Abdeckrahmen über eine gesonderte Dichtung abgedichtet. Diese letztgenannte zweite Dichtung ist in einer Ausführung des Installationsgerätes als Steckdose (SCHUKO-Steckdose) als Flächendichtung in einer Ausnehmung auf der dem Abdeckrahmen zugekehrten Unterseite eines den eigentlichen Steckdosentopf umgebenden Randsteges untergebracht. Bei einem Installationsschalter ist diese zweite Dichtung als Haubendichtung ausgebildet, die auf der dem Gerätesockel abgekehrten Seite des Abdeckrahmens über einen gesonderten Anpreßrahmen gehalten wird. Die bekannte Dichtungsanordnung führt in allen Ausführungsformen zu einem großen Herstellungs- und Montageaufwand, zumal wegen der Unterbringung der Dichtungselemente speziell angepaßte Geräteteile für die wassergeschützte Ausführung erforderlich sind. Zudem ergibt sich durch die Ausgestaltung und Unterbringung der Dichtungen auch eine nachteilig große Bauhöhe.

Der vorliegenden Erfindung liegt die Aufgabe zugrunde, eine Dichtungsanordnung der genannten Art zu schaffen, die preisgünstig hergestellt und auf schnelle und einfache Weise - im Bedarfsfall zur Nachrüstung auch noch nachträglich - montiert werden kann.

Erfindungsgemäß wird dies dadurch erreicht, daß das erste Dichtungselement über einen Übergangsabschnitt einstückig mit dem zweiten Dichtungselement zu einem integralen Dichtungsteil verbunden ist. Dabei ist es zweckmäßig, wenn das erste Dichtungselement als flacher, rahmenartig insbesondere rechteckig umlaufender Abschnitt zur flächigen Anordnung zwischen dem Tragring und dem Abdeckrahmen ausgebildet ist.

Durch diese erfindungsgemäße Ausgestaltung ist zunächst vorteilhafterweise nur noch ein einziges integral ausgebildetes Dichtungsteil erforderlich, welches preiswert - als Formteil insbesondere aus Silikon oder dergleichen - herzustellen und schnell und einfach zu montieren ist. Durch die bevorzugte flache Ausbildung des ersten Dichtungselementes braucht dieses nur zwischen Tragring und Abdeckrahmen gelegt zu werden. Das erfindungsgemäße Dichtungsteil eignet sich daher auch zur Nachrüstung von ursprünglich nicht spritzwassergeschützten Geräten, deren Abdeckrahmen mit einer im wesentlichen ebenen Anlagefläche - und ursprünglich ohne Dichtung - ausgebildet ist. Vor allem durch das als Flachdichtung ausgebildete erste Dichtungselement wird zudem auch eine geringe Bauhöhe, d. h. ein geringer Wandüberstand, erreicht.

Das zweite, erfindungsgemäß über den Übergangsabschnitt einstückig mit dem ersten Dichtungselement verbundene Dichtungselement ist für eine Anwendung bei einer Steckdose einerseits und bei einem Schalter andererseits jeweils unterschiedlich ausgebildet. Dies soll weiter unten in der Beschreibung von bevorzugten Ausführungsbeispielen genauer erläutert werden.

Weitere vorteilhafte Ausgestaltungsmerkmale der Erfindung sind in den Unteransprüchen und der folgenden Beschreibung enthalten.

Anhand von bevorzugten Ausführungsbeispielen soll nun die Erfindung genauer erläutert werden. Dabei zeigen:
- Fig. 1: eine perspektivische Explosionsdarstellung der im Zusammenhang mit der erfindungsgemäßen Dichtungsanordnung wesentlichen Einzelteile eines Elektro-Installationsgerätes in einer Ausführung als Unterputz-Steckdose,
- Fig. 2: einen vergrößerten Schnitt durch einen mit einem erfindungsgemäßen integralen Dichtungsteil ausgestatteten Abdeckrahmen in der in Fig. 1 gekennzeichneten Schnittebene II-II,
- Fig. 3: eine Darstellung analog zu Fig. 1 eines Elektro-Installationsgerätes in einer Ausführung als Unterputz-Schalter,
- Fig. 4: eine Perspektivansicht des erfindungsgemäßen Dichtungsteils in der Ausführung nach Fig. 3 mit Abdeckrahmen in lagerichtiger Montageposition,
- Fig. 5: einen Schnitt in der Ebene V-V gemäß Fig. 4,
- Fig. 6: eine Perspektivansicht auf die Oberseite des montierten Installationsschalters gemäß Fig. 3, jedoch ohne Zentraleinsatzelement bzw. Betätigungswippe, und
- Fig. 7: einen Schnitt in der Ebene VII-VII gemäß Fig. 6 mit zusätzlicher Darstellung der Betätigungswippe.

In den verschiedenen Figuren der Zeichnung sind gleiche Teile stets mit den gleichen Bezugszeichen versehen und werden daher in der Regel auch jeweils nur einmal beschrieben.

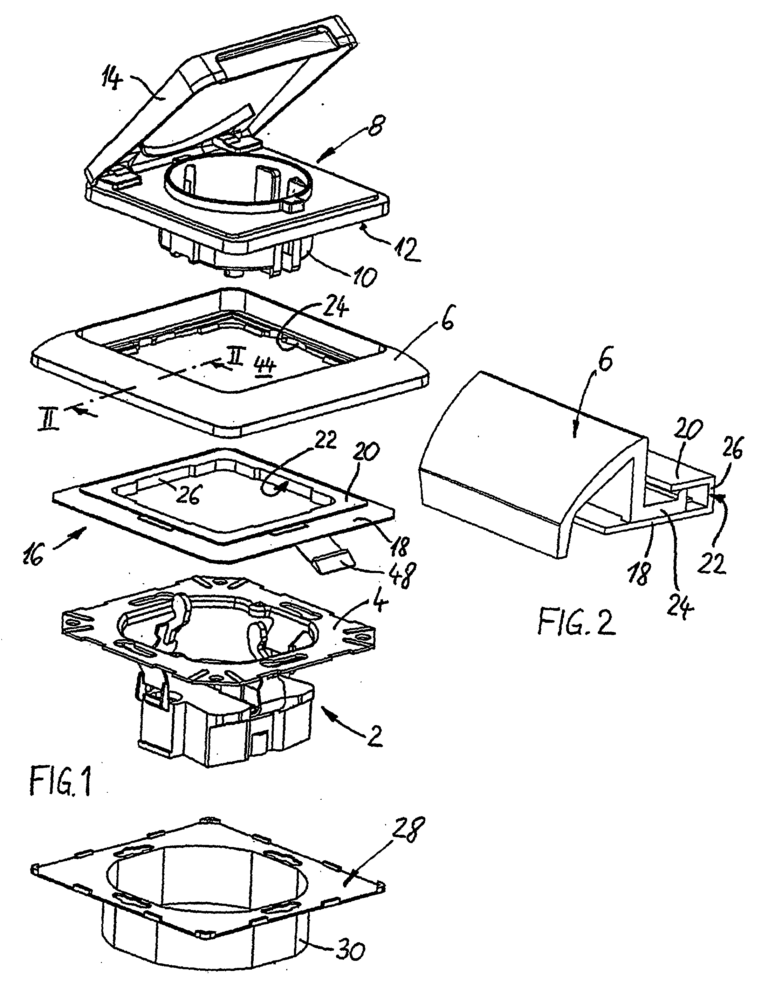

In Fig. 1 sind die Einzelteile einer ersten Ausführungsform eines Elektro-Installationsgerätes veranschaulicht; es handelt sich um eine Unterputz-Steckdose (UP-SCHUKO-Steckdose). Ein Gerätesockel 2 ist in eine nicht dargestellte Unterputzdose einsetzbar. Der Gerätesockel 2 weist einen Tragring 4 auf, der im eingesetzten Zustand auf einer die Unterputzdose umgebenden Montagefläche, üblicherweise einer Wandfläche, aufliegt. Der Tragring 4 wird dann mit einem Abdeckrahmen 6 abgedeckt. In den Abdeckrahmen 6 wird ein Zentraleinsatzelement 8 eingesetzt, welches bei dieser Ausführung einen Steckdosentopf 10 (sog. SCHUKO-Topf), einen den Steckdosentopf 10 umschließenden Randbereich 12 sowie wegen der spritzwassergeschützten Ausführung insbesondere einen Klappdeckel 14 aufweist.

Zur spritzwassergeschützten Abdichtung ist ein erfindungsgemäß integral ausgebildetes Dichtungsteil 16 vorgesehen, welches ein erstes Dichtungselement 18 zur Abdichtung zwischen dem Tragring 4 des Gerätesockels 2 und dem Abdeckrahmen 6 sowie ein zweites Dichtungselement 20 zur Abdichtung zwischen dem Abdeckrahmen 6 und dem Zentraleinsatzelement 8 aufweist. Erfindungsgemäß sind die beiden Dichtungselemente 18, 20 einstückig über einen Übergangsabschnitt 22 miteinander verbunden. Das erste Dichtungselement 18 ist als flacher, rahmenartig und in Anpassung an den Tragring 4 und den Abdeckrahmen 6 insbesondere rechteckig umlaufender Abschnitt zur flächigen Anordnung zwischen dem Tragring 4 und dem Abdeckrahmen 6 ausgebildet. Für die in Fig. 1 veranschaulichte Anwendung bei einer Steckdose ist auch das integrale Dichtungsteil 16 entsprechend rahmenförmig ausgebildet, wobei das zweite Dichtungselement 20 flach und ebenfalls entsprechend rahmenartig insbesondere rechteckig umlaufend sowie mit Abstand im wesentlichen parallel zu dem ersten Dichtungselement 18 liegend zur flächigen Anordnung zwischen einem inneren Randsteg 24 des Abdeckrahmens 6 und dem Randbereich 12 des Zentraleinsatzelementes 8 ausgebildet ist. Der Übergangsabschnitt 22 bildet in dieser Ausführungsform einen im wesentlichen senkrecht zu den beiden flachen Dichtungselementen 18, 20 angeordneten, umlaufenden Verbindungssteg 26 (siehe auch Fig. 2). Somit weist das Dichtungsteil 16 in dieser Ausführung einen U-förmigen Profilquerschnitt auf, so daß das Dichtungsteil 16 gemäß Fig. 2 auf den inneren Randsteg 24 des Abdeckrahmens 6 aufgesetzt und so vormontiert werden kann.

Aus der beschriebenen Ausgestaltung des Dichtungsteils 16 resultieren vorteilhafterweise eine preiswerte Herstellung sowie auch eine einfache Montage, weil die Einzelteile des Installationsgerätes lediglich so hergestellt sowie auch montiert zu werden brauchen, als ob keine Abdichtung vorgesehen wäre. Dennoch wird durch das erfindungsgemäße Dichtungsteil 16 und seine unverlierbar vormontierte Anordnung auf dem inneren Randsteg 24 des Abdeckrahmens 6 eine sichere Spritzwasserabdichtung nach IP 44 gewährleistet. Auch vorhandene, ursprünglich nicht wassergeschützte Installationsgeräte können auf einfache Weise mit dem Dichtungsteil 16 nachgerüstet und so in eine wassergeschützte Ausführung umgerüstet werden.

Beide Dichtungselemente 18, 20 werden durch die Befestigung, insbesondere Schraubbefestigung, des Zentraleinsatzelementes 8 am Gerätesockel 2 verpreßt.

Wie sich ferner aus Fig. 1 ergibt, ist vorzugsweise ein an sich bekannter zusätzlicher Dichtflansch 28 zur Anordnung zwischen dem Tragring 4 und der die Unterputzdose umgebenden Montagefläche vorgesehen. Dieser Dichtflansch 28 ist üblicherweise einstückig mit einem in die Unterputzdose eingreifenden und den eingesetzten Gerätesockel 2 umschließenden, im wesentlichen ringförmigen Kragen 30 verbunden.

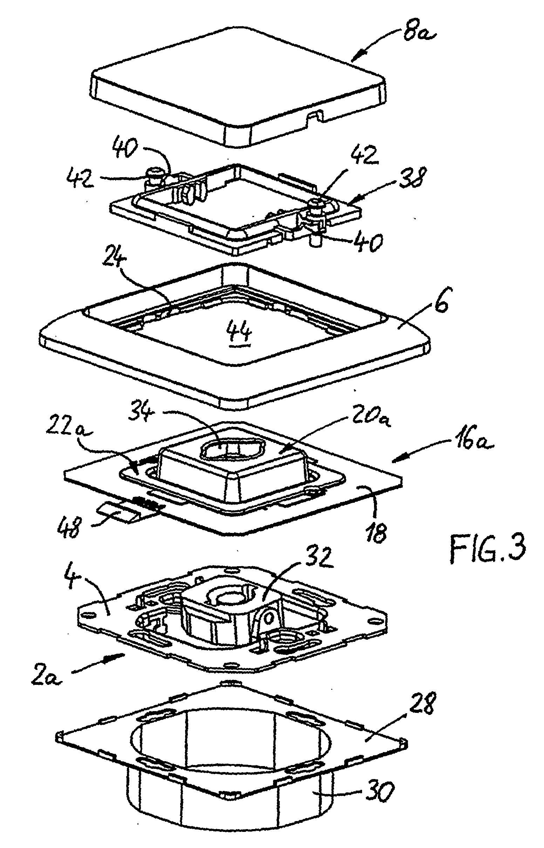

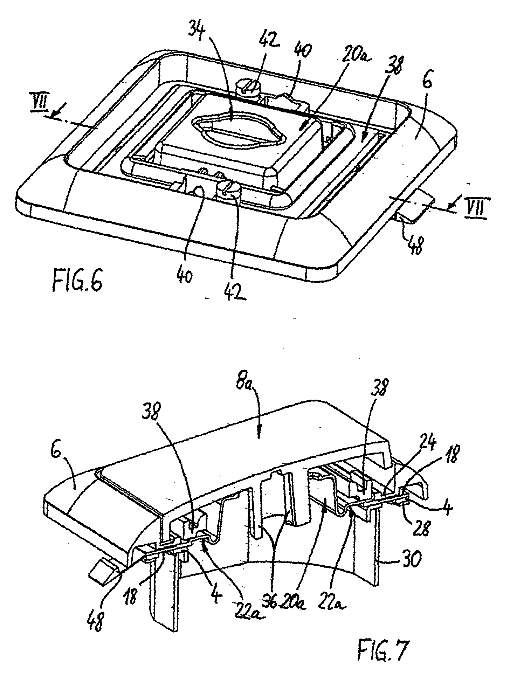

In Fig. 3 ist das Installationsgerät in einer Ausführungsform als Schalter (Wippschalter) veranschaulicht. Der als Schalter ausgebildete Gerätesockel 2a weist wiederum den Tragring 4 auf. Der Abdeckrahmen 6 entspricht im wesentlichen der Ausführung nach Fig. 1. Das Zentraleinsatzelement ist hier jedoch als Betätigungswippe ausgebildet, weshalb hier im Gegensatz zur Fig. 1 die Bezugsziffer 8a verwendet wurde. Auch das erfindungsgemäß einstückige Dichtungsteil unterscheidet sich von der Ausführung nach Fig. 1, weshalb es in Fig. 3 mit der Bezugsziffer 16a versehen ist. Bei diesem Dichtungsteil 16a ist das zweite Dichtungselement 20a haubenartig, im wesentlichen rechteck- bzw. quaderförmig, zum Überdecken des Bereichs mindestens einer Schaltwippe 32 des Gerätesockels 2a ausgebildet. Das haubenförmige zweite Dichtungselement 20a weist eine Durchführöffnung 34 für einen in die Schaltwippe 32 eingreifenden Verbindungsansatz 36 (siehe hierzu Fig. 7) des als Betätigungswippe ausgebildeten Zentraleinsatzelementes 8a auf.

In dieser Ausführungsform bildet das Dichtungsteil 16a eine Art Labyrinthdichtung, die einen kontrollierten Wasserablauf nur nach außen gestattet, ein Eindringen von Wasser in das Geräteinnere aber wirksam verhindert,

Wie sich weiterhin aus Fig. 3 ergibt, ist ein rahmenförmiges Anpreßelement 38 zum Andrücken des Abdeckrahmens 6 gegen den Tragring 4 des Gerätesockels 2a unter Zwischenlage des ersten Dichtungselementes 18 des integralen Dichtungsteils 16a vorgesehen. Das Anpreßelement 38 weist vorteilhafterweise auch Lageransätze 40 zur Kipplagerung der Betätigungswippe (8a) auf; siehe auch Fig. 6. Das Anpreßelement 38 wird zweckmäßigerweise mittels Schrauben 42 mit dem Gerätesockel 2a verschraubt.

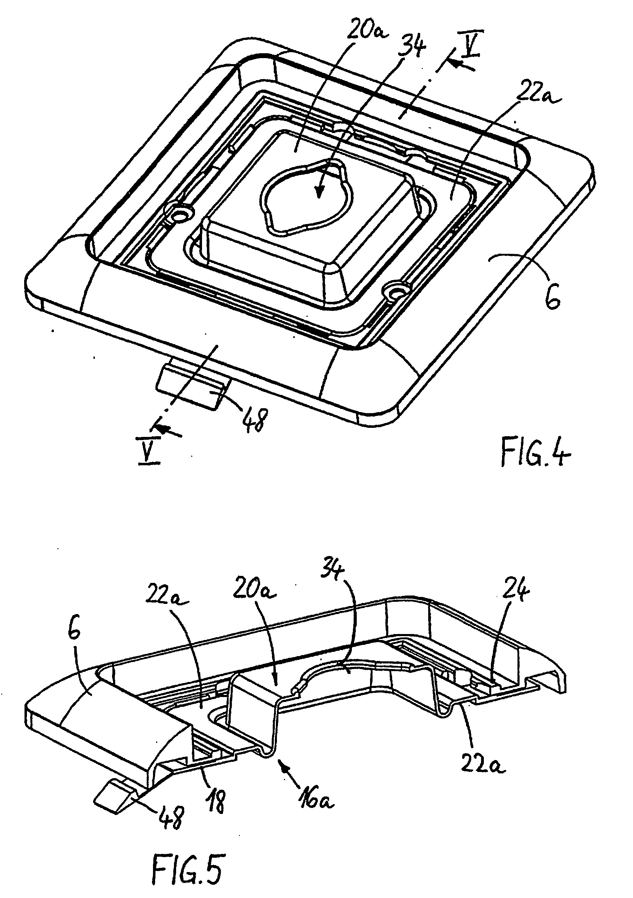

In dieser Ausführungsform nach Fig. 3 bis 7 ist der Übergangsabschnitt 22a des Dichtungsteils 16a flach und derart rahmenartig umlaufend und insbesondere in einer gegenüber dem flachen ersten Dichtungselement 18 von dem Gerätesockel 2a weg im wesentlichen parallel versetzten Ebene liegend ausgebildet, daß er - vor allem zur Positionierung - in eine von dem inneren Randsteg 24 des Abdeckrahmens 6 umschlossene Rahmenöffnung 44 eingreift. Durch den Ebenen-Versatz zwischen dem ersten Dichtungselement 18 und dem Übergangsabschnitt 22a wird zudem vorzugsweise erreicht, daß das Anpreßelement 38 nach Montage bereichsweise an dem Übergangsabschnitt 22a zur Anlage kommt. Es ergibt sich hierdurch eine zusätzliche Dichtwirkung.

In beiden dargestellten Ausführungsformen weist das integrale Dichtungsteil 16 bzw. 16a vorzugsweise eine am Außenrand insbesondere des ersten Dichtungselementes 18 angebundene und im montierten Zustand den Abdeckrahmen 6 nach außen überragende Kennzeichnungslasche 48 auf. Diese Kennzeichnungslasche 48 kann im Bereich ihres den Abdeckrahmen 6 überragenden Endes eine Kennzeichnung insbesondere der Schutzart, z. B. "IP 44", tragen. Sie gibt hierdurch dem Anwender direkten Aufschluß über die Art des Installationsgerätes. Nach oder während der Montage kann die Kennzeichnungslasche 48 selbstverständlich entfernt werden, beispielsweise durch Abschneiden. Es kann aber vorteilhaft sein, eine Art Sollbruchstelle bzw. Sollrißstelle zu bilden, um auch ohne Werkzeug die Lasche 48 leicht entfernen zu können.

Die Erfindung ist nicht auf die dargestellten und konkret beschriebenen Ausführungsbeispiele beschränkt, sondern wird ausschließlich durch den Gegenstand der Ansprüche definiert.

## Patentansprüche

1. Dichtungsanordnung für spritzwassergeschützte Elektro-Installationsgeräte in Unterputz-Ausführung, insbesondere für Steckdosen und/oder Schalter, wobei ein erstes Dichtungselement (18) zur Abdichtung zwischen einem Tragring (4) eines in eine Unterputzdose einsetzbaren Gerätesockels (2) und einem Abdeckrahmen (6) sowie ein zweites Dichtungselement (20) zur Abdichtung zwischen dem Abdeckrahmen (6) und einem Zentraleinsatzelement (8) vorgesehen sind,
**dadurch gekennzeichnet, daß** das erste Dichtungselement (18) über einen Übergangsabschnitt (22, 22a) einstückig mit dem zweiten Dichtungselement (20, 20a) zu einem integralen Dichtungsteil (16, 16a) verbunden ist.

2. Dichtungsanordnung nach Anspruch 1,
**dadurch gekennzeichnet, daß** das erste Dichtungselement (18) als flacher, rahmenartig insbesondere rechteckig umlaufender Abschnitt zur flächigen Anordnung zwischen dem Tragring (4) und dem Abdeckrahmen (6) ausgebildet ist.

3. Dichtungsanordnung nach Anspruch 1 oder 2,
**dadurch gekennzeichnet, daß** das integrale Dichtungsteil (16) für eine Anwendung bei Steckdosen (Fig. 1) rahmenförmig ausgebildet ist, wobei das zweite Dichtungselement (20) flach und entsprechend rahmenartig insbesondere rechteckig umlaufend sowie mit Abstand im wesentlichen parallel zu dem ersten Dichtungselement (18) liegend zur flächigen Anordnung zwischen einem inneren Randsteg (24) des Abdeckrahmens (6) und einem Randbereich (12) des einen Steckdosentopf (10) bildenden Zentraleinsatzelementes (8) ausgebildet ist, und wobei der Übergangsabschnitt (22) einen im wesentlichen senkrecht zu den beiden flachen Dichtungselementen (18, 20) angeordneten Verbindungssteg (26) bildet.

4. Dichtungsanordnung nach Anspruch 1 oder 2,
**dadurch gekennzeichnet, daß** für eine Anwendung bei Schaltern (Fig. 3) das zweite Dichtungselement (20a) haubenartig zum Überdecken des Bereiches mindestens einer Schaltwippe (32) des Gerätesockels (2a) ausgebildet ist, wobei das haubenförmige zweite Dichtungselement (20a) mindestens eine Durchführöffnung (34) für einen in die Schaltwippe (32) eingreifenden Verbindungsansatz (36) des als Betätigungswippe ausgebildeten Zentraleinsatzelementes (8a) aufweist.

5. Dichtungsanordnung nach Anspruch 4,
**gekennzeichnet durch** ein rahmenförmiges Anpreßelement (38) zum Andrücken des Abdeckrahmens (6) gegen den Tragring (4) des Gerätesockels (2a) unter Zwischenlage des ersten Dichtungselementes (18) des integralen Dichtungsteils (16a).

6. Dichtungsanordnung nach Anspruch 4 oder 5,
**dadurch gekennzeichnet, daß** der Übergangsabschnitt (22a) des Dichtungsteils (16a) derart rahmenartig umlaufend und in einer gegenüber dem flachen ersten Dichtungselement (18) von dem Gerätesockel (2a) weg versetzten Ebene liegend ausgebildet ist, daß er in eine von einem inneren Randsteg (24) des Abdeckrahmens (6) umschlossene Rahmenöffnung (44) eingreift.

7. Dichtungsanordnung nach Anspruch 5 oder 6,
**dadurch gekennzeichnet, daß** das Anpreßelement (38) nach Montage bereichsweise an dem Übergangsabschnitt (22a) zur Anlage kommt.

8. Dichtungsanordnung nach einem oder mehreren der Ansprüche 1 bis 7,
**dadurch gekennzeichnet, daß** das integrale Dichtungsteil (16, 16a) aus Silikon oder dergleichen besteht.

9. Dichtungsanordnung nach einem oder mehreren der Ansprüche 1 bis 8,
**dadurch gekennzeichnet, daß** das integrale Dichtungsteil (16, 16a) eine am Außenrand insbesondere des ersten Dichtungselementes (18) angebundene und im montierten Zustand den Abdeckrahmen (6) nach außen überragende Kennzeichnungslasche (48) aufweist.

10. Dichtungsanordnung nach einem oder mehreren der Ansprüche 1 bis 9,
**gekennzeichnet durch** einen zusätzlichen Dichtflansch (28) zur Anordnung zwischen dem Tragring (4) und einer die Unterputzdose umgebenden Montagefläche.

11. Dichtungsanordnung nach Anspruch 10,
**dadurch gekennzeichnet, daß** der Dichtflansch (28) einstückig mit einem in die Unterputzdose eingreifenden und den eingesetzten Gerätesockel (2) umschließenden, im wesentlichen ringförmigen Kragen (30) verbunden ist.

## Claims

1. Seal arrangement for splashproof electrical installation devices of the flush type, in particular for sockets and/or switches, a first seal element (18) for sealing between a .supporting ring (4) of a device base (2), which can be inserted into a flush-type box, and a covering frame (6) and also a second seal element (20) for sealing between the covering frame (6) and a central insert element (8) being provided, **characterized in that** the first seal element (18) is, via a transition portion (22, 22a), connected in one piece to the second seal element (20, 20a) to form an integral seal part (16, 16a).

2. Seal arrangement according to Claim 1, **characterized in that** the first seal element (18) is designed as a flat portion running round in a frame-like, in particular rectangular manner for flat arrangement between the supporting ring (4) and the covering frame (6).

3. Seal arrangement according to Claim 1 or 2, **characterized in that** the integral seal part (16) is designed in a frame-shaped manner for use in sockets (Fig. 1), the second seal element (20) being designed to be flat and to run round in a correspondingly frame-like, in particular rectangular manner and also to lie essentially parallel, with a spacing, to the first seal element (18), for flat arrangement between an inner edge web (24) of the covering frame (6) and an edge region (12) of the central insert element (6) forming a socket receptacle (10), and the transition portion (22) forming a connecting web (26) arranged essentially perpendicularly to the two flat seal elements (18, 20).

4. Seal arrangement according to Claim 1 or 2, **characterized in that**, for use in switches (Fig. 3), the second seal element (20a) is designed in the manner of a cover for covering over the region of at least one operating rocker (32) of the device base (2a), the cover-shaped second seal element (20a) having at least one passage opening (34) for a connection projection (36) of the central insert element (8a) designed as an actuating rocker, which projection mates with the operating rocker (32).

5. Seal arrangement according to Claim 4, **characterized by** a frame-shaped pressing element (38) for pressing the covering frame (6) towards the supporting ring (4) of the device base (2a) with the first seal element (18) of the integral seal part (16a) interposed.

6. Seal arrangement according to Claim 4 or 5, **characterized in that** the transition portion (22a) of the seal part (16a) is designed to run round in a frame-like manner and to lie in a plane offset away from the device base (2a) in relation to the flat first seal element (18) in such a way that it mates with a frame opening (44) surrounded by an inner edge web (24) of the covering frame (6).

7. Seal arrangement according to Claim 5 or 6, **characterized in that**, after mounting, the pressing element (38) comes to bear against the transition portion (22a) in regions.

8. Seal arrangement according to one or more of Claims 1 to 7, **characterized in that** the integral seal part (16, 16a) consists of silicone or the like.

9. Seal arrangement according to one or more of Claims 1 to 8, **characterized in that** the integral seal part (16, 16a) has an identification tongue (48) which is attached to the outer edge of in particular the first seal element (18) and, in the mounted state, projects outwards beyond the covering frame (6).

10. Seal arrangement according to one or more of Claims 1 to 9, **characterized by** an additional sealing flange (28) for arrangement between the supporting ring (4) and a mounting surface surrounding the flush-type box.

11. Seal arrangement according to Claim 10, **characterized in that** the sealing flange (28) is connected in one piece to an essentially annular collar (30) which mates with the flush-type box and surrounds the inserted device base (2).

## Revendications

1. Dispositif d'étanchéité pour appareils d'installations électriques protégés contre les projections d'eau, dans la construction encastrée, en particulier pour boîtiers de prises et/ou interrupteurs, dans lequel un premier élément d'étanchéité (18) destiné à établir l'étanchéité entre un anneau support (4) d'un socle d'appareil (2) pouvant être mis en place dans une boîte encastrée et un cadre de fermeture (6), ainsi qu'un deuxième élément d'étanchéité (20) destiné à établir l'étanchéité entre le cadre de fermeture (6) et un élément d'insertion central (8),
**caractérisé en ce que** le premier élément d'étanchéité (18) est relié en une seule pièce au deuxième élément d'étanchéité (20, 20a) au moyen d'un segment de transition (22, 22a) pour former un joint d'étanchéité monobloc (16, 16a).

2. Dispositif d'étanchéité selon la revendication 1,
**caractérisé en ce que** le premier élément d'étanchéité (18) est constitué par un segment plat, périphérique en forme de cadre, en particulier rectangulaire, destiné a être disposé à plat entre l'anneau support (4) et le cadre de fermeture (6).

3. Dispositif d'étanchéité selon la revendication 1 ou 2,
**caractérisé en ce que** le joint d'étanchéité monobloc (16) est réalisé en forme de cadre pour une utilisation dans des boîtiers de prises (Fig.1), le deuxième élément d'étanchéité (20) étant disposé à plat et de façon périphérique, également en forme de cadre, en particulier rectangulaire, ainsi qu'à distance du premier élément d'étanchéité (18), sensiblement parallèlement, pour réaliser une disposition à plat entre une nervure marginale intérieure (24) du cadre de fermeture (6) et une région marginale (12) de l'élément d'insertion central (8) qui forme la cuvette (10) du boîtier de prise, et le segment de transition (22) formant une nervure de liaison (26) disposée sensiblement perpendiculairement aux deux éléments d'étanchéité plats (18, 20).

4. Dispositif d'étanchéité selon la revendication 1 ou 2,
**caractérisé en ce que**, pour une utilisation dans des interrupteurs (Fig. 3), le deuxième élément d'étanchéité (20a) est agencé en forme de dôme pour recouvrir la région d'au moins un levier à bascule (32) du socle d'appareil (2a), le deuxième élément d'étanchéité (20a) en forme de dôme présentant au moins une ouverture de passage (34) pour un bossage d'assemblage (36) de l'élément d'insertion central (8a), constitué par une bascule de commande, qui est engagé dans le levier à bascule (32).

5. Dispositif d'étanchéité selon la revendication 4,
**caractérisé par** un élément presseur (38) en forme de cadre destiné à presser le cadre de fermeture (6) contre l'anneau support (4) du socle d'appareil (2a) avec interposition du premier élément d'étanchéité (18) du joint d'étanchéité monobloc (16a).

6. Dispositif d'étanchéité selon la revendication 4 ou 5,
**caractérisé en ce que** le segment de transition (22a) du joint d'étanchéité (16a) est configuré de façon périphérique en forme de cadre et situé dans un plan décalé dans le sens qui s'éloigne du socle d'appareil (2a) par rapport au premier élément d'étanchéité plat (18), et **en ce qu'**il est engagé dans une ouverture de cadre (44) qui est entourée par une nervure marginale intérieure (24) du cadre de fermeture (6).

7. Dispositif d'étanchéité selon la revendication 5 ou 6,
**caractérisé en ce que**, après le montage, l'élément presseur (38) vient en appui par endroits contre le segment de transition (22a).

8. Dispositif d'étanchéité selon une ou plusieurs des revendications 1 à 7,
**caractérisé en ce que** le joint d'étanchéité monobloc (16, 16a) est composé de silicone ou analogue.

9. Dispositif d'étanchéité selon une ou plusieurs des revendications 1 à 8,
**caractérisé en ce que** le joint d'étanchéité monobloc (16, 16a) présente une patte d'identification (48) attachée au bord extérieur, en particulier à celui du premier élément d'étanchéité (18), et qui déborde à l'extérieur dans l'état monté du cadre de fermeture (6).

10. Dispositif d'étanchéité selon une ou plusieurs des revendication 1 à 9,
**caractérisé par** une bride d'étanchéité additionnelle (28) destinée à être disposée entre l'anneau support (4) et une surface de montage qui entoure la boîte encastrée.

11. Dispositif d'étanchéité selon la revendication 10,
**caractérisé en ce que** la bride d'étanchéité (28) est reliée en une seule pièce à un collet (30) sensiblement annulaire, qui est engagé dans la boîte encastrée et qui entoure le socle d'appareil (2) mis en place.
